# EUROPÄISCHE PATENTSCHRIFT

(11) **EP 1 071 189 B1**
(45) Veröffentlichungstag und Bekanntmachung des Hinweises auf die Patenterteilung: **25.01.2006**
(21) Anmeldenummer: 00114259.5
(22) Anmeldetag: 04.07.2000
(51) Int. Cl.: H02K 5/173, H02K 9/22

(54) **Für einen Einsatz in Umgebungen mit hohen Temperaturen vorgesehener Elektromotor**
Electric motor for use in high temperature environments
Moteur électrique pour utilisation dans des environnements à haute température

(30) Priorität: 20.07.1999 DE 19933999
(43) Veröffentlichungstag der Anmeldung: 24.01.2001
(73) Patentinhaber: SIEMENS AKTIENGESELLSCHAFT, 80333 München (DE)
(72) Erfinder: Severien, Herbert, 65824 Schwalbach (DE); Bernarding, Eugen, 61250 Usingen (DE)

(56) Entgegenhaltungen:
- GB-A- 2 062 365
- GB-A- 2 140 218
- US-A- 4 823 032
- PATENT ABSTRACTS OF JAPAN vol. 1997, no. 07, 31. Juli 1997 (1997-07-31) -& JP 09 074707 A (YASKAWA ELECTRIC CORP), 18. März 1997 (1997-03-18)
- PATENT ABSTRACTS OF JAPAN vol. 010, no. 379 (E-465), 18. Dezember 1986 (1986-12-18) & JP 61 170250 A (SHIBAURA ENG WORKS CO LTD), 31. Juli 1986 (1986-07-31)
- PATENT ABSTRACTS OF JAPAN vol. 1996, no. 09, 30. September 1996 (1996-09-30) -& JP 08 140311 A (ASMO CO LTD), 31. Mai 1996 (1996-05-31)

## Beschreibung

Die Erfindung betrifft einen für einen Einsatz in Umgebungen mit hohen Temperaturen vorgesehenen Elektromotor nach dem Oberbegriff des Anspruchs 1

Solche Elektromotoren werden insbesondere in Kraftfahrzeugen nahe oder an einer Brennkraftmaschine häufig eingesetzt und sind aus der Praxis bekannt. Das Gehäuse ist dabei als Rückschlußrohr beispielsweise aus Stahlblech gefertigt. Bei dem Einsatz des Elektromotors in Umgebungen mit hohen Temperaturen kommt es zu einer Stauung von durch den Betrieb des Elektromotors entstehender Wärme innerhalb des Gehäuses. Deshalb sind die Lagerschilde aus Aluminium gefertigt und leiten die im Innern des Elektromotors entstehende Wärme an das rohrförmige Gehäuse weiter. Das Gehäuse dient damit zur Ableitung der im Betrieb des Elektromotors entstehenden Wärme beispielsweise in ein Karosserieteil oder ein Bauteil der Brennkraftmaschine des Kraftfahrzeuges.

Nachteilig bei dem bekannten Elektromotor ist, daß er sehr kostenintensiv zu fertigen ist. Beispielsweise werden die Lagerschilde des bekannten Elektromotors zunächst aus Aluminium im Spritzgußverfahren gefertigt. Anschließend werden die Aufnahmen für eines der Lager und ein Anschluß für das Gehäuse gedreht.

Die GB 2 062 365 A offenbart einen Teilbereich eines Gehäuses für einen Elektromotor, bei dem ein Metallteil unmittelbar auf einer Endplatte angeordnet ist und ein radial innen angeordnetes Lager mit einem rohrförmigen Bauteil verbindet. Das Metallteil ist unmittelbar auf der aus synthetischem Material gefertigten Endplatte angeordnet. Dies ermöglicht eine besonders einfache Montage, hat jedoch den Nachteil, dass die Wärme aufgrund der relativ hohen Wärmeleiteigenschaften des Metallteils unmittelbar in die Endplatte eingeleitet wird. Damit vermag das Metallteil die Endplatte nicht vor hohen, innerhalb des Elektromotors entstehenden Temperaturen zu schützen. Dies führt jedoch dazu, dass die Stabilität der Endplatte mit steigender Temperatur stark abnimmt.

Die die JP 09 074 707 offenbart ein Lagerteil, welches zwischen einem Wellenabsatz und einem Lager eine Abdeckung aufweist. Damit wird das Lager vor hohen Temperaturen geschützt. In einem Gehäuse eines Elektromotors aufstauende Wärme wird hier jedoch nicht abgeleitet.

Die US 4,823,032 offenbart einen Endbereich einer dynamoelektrischen Maschine mit einem Gehäuse aus Kunststoff. Das Gehäuse aus Kunststoff wird von einem Metalleinsatz versteift. Weiterhin führt der Metalleinsatz Wärme von einem Lager ab. Der Metalleinsatz stützt sich jedoch an dem Gehäuse aus Kunststoff ab und vermag dieses nicht vor Wärmeeintrag zu schützen.

Die JP 61 170 250 offenbart ein Gehäuse bei dem ein Kugellager von einem Stahlschild gehalten wird. Das Stahlschild stützt sich an einem rohrförmigen Bauteil ab und bildet damit ein Lagerschild. Dies führt jedoch zu einer sehr kostenintensiven Fertigung.

Die GB 2 140 218 A offenbart einen Elektromotor zum Antrieb eines Scheibenwischers bei der eine elektrisch und wärmeleitente Scheibe vor einem aus Kunststoff gefertigten Flansch angeordnet ist. Die Scheibe ist von dem Lager des Elektromotors beabstandet. Damit vermag die Scheibe keine Wärme von dem Lager abzuleiten.

Der Erfindung liegt das Problem zugrunde, einen Elektromotor der eingangs genannten Art so zu gestalten, daß er besonders kostengünstig zu fertigen ist.

Dieses Problem wird erfindungsgemäß durch die Merkmale der Anspruchs 1 gelöst.

Diese Gestaltung des erfindungsgemäßen Elektromotors führt zu einer starken Verringerung der Materialkosten des Lagerschildes, da das Wärmeableitblech wesentlich dünnwandiger gestaltet sein kann als das aus Aluminium gefertigte Lagerschild. Weiterhin läßt sich der Kunststoff für das Lagerschild mit besonders geringen Toleranzen fertigen, so daß eine kostenintensive Nachbearbeitung im Drehverfahren nicht mehr erforderlich ist. Der erfindungsgemäße Elektromotor läßt sich daher besonders kostengünstig fertigen.

Das aus Kunststoff gefertigte Lagerschild wird gemäß einer anderen vorteilhaften Weiterbildung der Erfindung besonders gering mit Wärme belastet, wenn das Wärmeableitblech im Bereich des Lagers von dem Lagerschild beabstandet ist.

Ein zuverlässiger Wärmeübergang von dem Lager des Lagerschildes zu dem Wärmeableitblech läßt sich einfach sicherstellen, wenn das Wärmeableitblech mit dem Lager verpreßt ist.

Zur weiteren Verbesserung des Wärmeübergangs von dem Lager auf das Wärmeableitblech trägt es bei, wenn das Wärmeableitblech einen hülsenförmigen Bund zur Verpressung mit dem Lager hat.

Im Innern des Gehäuses entstehende Wärme wird zuverlässig von dem Lager ferngehalten, wenn der Bund einen radial nach innen weisenden, das Lager übergreifenden Rand hat. Dieser Rand dient als Blende für das Lager und kann bis unmittelbar vor die Welle geführt sein.

Ein zuverlässiger Wärmeübergang von dem Wärmeableitblech auf das rohrförmige Gehäuse läßt sich gemäß einer anderen vorteilhaften Weiterbildung der Erfindung einfach sicherstellen, wenn ein umlaufender Rand des Wärmeableitblechs axial zwischen dem Lagerschild und dem rohrförmigen Gehäuse eingespannt ist.

Das Wärmeableitblech könnte beispielsweise aus Aluminium gefertigt sein. Eine zuverlässige und dauerhafte Verpressung des Lagers mit dem Wärmeableitblech läßt sich jedoch gemäß einer anderen vorteilhaften Weiterbildung der Erfindung sicherstellen, wenn das Wärmeableitblech aus Kupfer gefertigt ist. Durch die Fertigung des wärmeableitblechs aus Kupfer und des Lagers aus Stahl haben beide Bauteile annähernd denselben Wärmeausdehnungskoeffizienten, so daß die Preßpassung der Bauteile durch Temperaturschwankungen nicht belastet wird.

Das Wärmeableitblech könnte beispielsweise ringförmig gestaltet sein. Das Wärmeableitblech hat jedoch gemäß einer anderen vorteilhaften Weiterbildung der Erfindung ein besonders geringes Gewicht, wenn der hülsenförmige Bund und der gegen das Gehäuse vorgespannte Rand des Wärmeableitblechs über Stege miteinander verbunden sind. Dies trägt zudem zur weiteren Verringerung der Materialkosten für den erfindungsgemäßen Elektromotor bei.

Der Kunststoff des Lagerschildes vermag gemäß einer anderen vorteilhaften Weiterbildung der Erfindung besonders hohen Temperaturen standzuhalten, wenn der Kunststoff des Lagerschildes chemisch aushärtend ist.

Die Erfindung läßt zahlreiche Ausführungsformen zu. Zur weiteren verdeutlichung ihres Grundprinzips ist eine davon in der Zeichnung dargestellt und wird nachfolgend beschrieben. Diese zeigt in
- Fig.1: eine Schnittdarstellung eines Endstücks eines erfindungsgemäßen Elektromotors,
- Fig.2: eine Schnittdarstellung durch den Elektromotor aus Figur 1 entlang der Linie II - II.

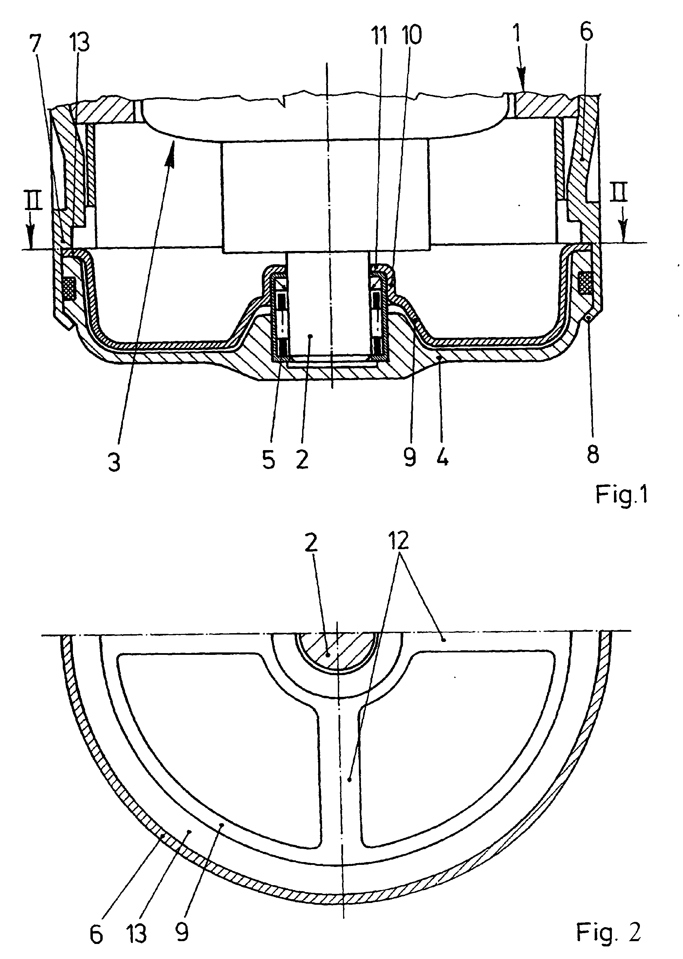

Figur 1 zeigt ein Endstück eines Elektromotors mit einem Stator 1 und einem auf einer drehbaren Welle 2 drehfest angeordneten Rotor 3 im Längsschnitt. Die Welle 2 ist in auf Lagerschilden 4 angeordneten Lagern 5 gelagert. Stellvertretend für zwei jeweils an einem Endstück angeordnete Lagerschilde 4 ist in der Zeichnung nur eines davon dargestellt. Der Elektromotor hat ein rohrförmiges, als Rückschlußkörper für den Stator 1 ausgebildetes Gehäuse 6. Das Gehäuse 6 ist aus Stahlblech gefertigt. Das Lagerschild 4 ist aus einem chemisch aushärtenden Kunststoff gefertigt und in dem Gehäuse 6 verspannt. Zur Verspannung des Lagerschildes 4 hat das Gehäuse 6 einen Absatz 7 und einen das Lagerschild 4 hintergreifenden und umgebördelten Bund 8. Zwischen dem Lagerschild 4 und dem Absatz 7 des Gehäuses 6 ist ein Rand 13 des Wärmeableitblechs 9 eingespannt. Das Wärmeableitblech 9 erstreckt sich bis zu dem Lager 5 und ist mit diesem verpreßt. Hierfür hat das Wärmeableitblech 9 einen hülsenförmigen Bund 10. An dem hülsenförmigen Bund 10 schließt sich ein radial nach innen weisender, bis unmittelbar vor die Welle 2 geführter Rand 11 an. Weiterhin zeigt Figur 1, daß das Wärmeableitblech 9 und das Lagerschild 4 in ihrem radial inneren Bereich voneinander beabstandet sind. In dem Elektromotor erzeugte Wärme wird von dem Lager 5 auf das Wärmeableitblech 9 übertragen und von diesem zu dem Gehäuse 6 weitergeleitet. Hierdurch werden hohe Temperaturen von dem Lagerschild 4 ferngehalten und eine hohe Temperaturbelastung des Lagers 5 vermieden.

Figur 2 zeigt in einer Schnittdarstellung entlang der Linie II - II aus Figur 1, daß die radial inneren und die radial äußeren Bereiche des Wärmeableitblechs 9 über Stege 12 miteinander verbunden sind. Hierdurch hat das Wärmeableitblech 9 ein besonders geringes Gewicht.

## Patentansprüche

1. Für einen Einsatz im Wärmeabgabebereich einer Brennkraftmaschine vorgesehener Elektromotor mit jeweils ein Lager (5) für eine Welle (2) aufweisenden Lagerschilden (4) und mit einem rohrförmigen Gehäuse (6), an dessen Stirnseiten die Lagerschilde (4) befestigt sind, wobei das Gehäuse (6)aus einem Wärme gut leitenden Material gefertigt ist, wobei zumindest eines der Lagerschilde (4) aus Kunststoff gefertigt ist und ein Wärmeableitblech (9) aufweist, wobei der Elektromotor einen Stator (1) und einen drehfest auf der Welle (2) angeordneten Rotor (3) hat, und das Wärmeableitblech (9) zwischen dem Lager (5) und dem Gehäuse (6) von dem Lagerschild (4) beabstandet ist und auf der dem Rotor (3) zugewandten Seite des Lagerschildes (4) angeordnet ist, **dadurch gekennzeichnet , dass** das Wärmeableitblech (9) einen hülsenförmigen Bund (10) zur Verpressung mit dem Lager (5) hat, dass der Bund (10) einen radial nach innen weisenden, das Lager (5) übergreifenden Rand (11) hat und dass sich die Beabstandung des Wärmeableitblechs (9) von dem Lagerschild (4) von dem Bund (10) bis zu dem umlaufenden Rand (13) des Wärmeableitbleches (9) erstreckt.

2. Elektromotor nach Anspruch 1, **dadurch gekennzeichnet, dass** ein umlaufender Rand (13) des Wärmeableitblechs (9) axial zwischen dem Lagerschild (4) und dem rohrförmigen Gehäuse (6) eingespannt ist.

3. Elektromotor nach zumindest einem der vorhergehenden Ansprüche, **dadurch gekennzeichnet, dass** das Wärmeableitblech (9) aus Kupfer gefertigt ist.

4. Elektromotor nach zumindest einem der vorhergehenden Ansprüche, **dadurch gekennzeichnet, dass** der hülsenförmige Bund (10) und der gegen das Gehäuse (6) vorgespannte Rand (13) des Wärmeableitblechs (9) über Stege (12) miteinander verbunden sind.

5. Elektromotor nach zumindest einem der vorhergehenden Ansprüche , **dadurch gekennzeichnet, dass** der Kunststoff des Lagerschildes (4) chemisch aushärtend ist.

## Claims

1. Electric motor intended for use in the heat output region of an internal combustion engine, having bearing plates (4) which each have one bearing (5) for a shaft (2), and having a tubular housing (6) on whose end faces the bearing plates (4) are mounted, with the housing (6) being produced from a highly thermally conductive material, at least one of the bearing plates (4) being made from plastic and having a heat dissipation plate (9), with the electric motor having a stator (1) and a rotor (3) which is arranged in a rotationally fixed manner on the shaft (2), and with the heat dissipation plate (9) being at a distance from the bearing plate (4) between the bearing (5) and the housing (6) and being arranged on the side of the bearing plate (4) facing the rotor (3), **characterized in that** the heat dissipation plate (9) has a collar (10) in the form of a sleeve for pressing against the bearing (5), **in that** the collar (10) has a rim (11) which faces radially inward and engages over the bearing (5) and **in that** the distance between the heat dissipation plate (9) and the bearing plate (4) extends from the collar (10) as far as the circumferential rim (13) of the heat dissipation plate (9).

2. Electric motor according to Claim 1, **characterized in that** a circumferential rim (13) of the heat dissipation plate (9) is clamped in axially between the bearing plate (4) and the tubular housing (6).

3. Electric motor according to at least one of the preceding claims, **characterized in that** the heat dissipation plate (9) is made of copper.

4. Electric motor according to at least one of the preceding claims, **characterized in that** the collar (10), which is in the form of a sleeve, and that rim (13) of the heat dissipation plate (9) which is prestressed against the housing (6) are connected to one another via webs (12).

5. Electric motor according to at least one of the preceding claims, **characterized in that** the plastic of the bearing plate (4) hardens chemically.

## Revendications

1. Moteur électrique prévu pour être mis en oeuvre dans une zone diffusant de la chaleur d'un moteur à combustion interne, ayant des flasques (4) comportant chacune un palier (5) pour un arbre (2) et un boîtier (6) en forme de tube, sur les faces frontales duquel sont montées les flasques (4), le boîtier (6) étant fabriqué en une matière à bonne conduction thermique, où au moins l'une des flasques (4) est fabriquée en matière plastique et comporte une tôle d'évacuation de la chaleur (9), où le moteur électrique a un stator (1) et un rotor (3) monté en blocage de rotation sur l'arbre (2) et où la tôle d'évacuation de la chaleur (9) est à une certaine distance de la flasque (4) entre le palier (5) et le boîtier (6) et est disposée sur le côté de la flasque (4) tourné vers le rotor (3), **caractérisé par le fait que** la tôle d'évacuation de la chaleur (9) a un bourrelet (10) en forme de douille pour un pressage avec le palier (5), que le bourrelet (10) a une bordure (11) tournée radialement vers l'intérieur et recouvrant le palier (5) et que l'écart entre la tôle d'évacuation de la chaleur (9) et la flasque (4) s'étend du bourrelet (10) jusqu'à la bordure circulaire (13) de la tôle d'évacuation de la chaleur (9).

2. Moteur électrique selon la revendication 1 **caractérisé par le fait qu**'une bordure circulaire (13) de la tôle d'évacuation de la chaleur (9) est serrée axialement entre la flasque (4) et le boîtier (6) en forme de tube.

3. Moteur électrique selon au moins l'une des revendications précédentes **caractérisé par le fait que** la tôle d'évacuation de la chaleur (9) est fabriquée en cuivre.

4. Moteur électrique selon au moins l'une des revendications précédentes **caractérisé par le fait que** le bourrelet (10) en forme de douille et la bordure (13) de la tôle d'évacuation de la chaleur (9), qui est pressée contre le boîtier (6), sont liés l'un à l'autre par des entretoises (12).

5. Moteur électrique selon au moins l'une des revendications précédentes **caractérisé par le fait que** la matière plastique de la flasque (4) durcit chimiquement.
